# EUROPEAN PATENT SPECIFICATION

(11) **EP 3 359 289 B1**
(45) Date of publication and mention of the grant of the patent: **12.08.2020**
(21) Application number: 16777994.1
(22) Date of filing: 05.10.2016
(51) Int. Cl.: B01J 35/00, B01J 23/745, B01J 23/78, B01J 37/34, B01J 37/04, B01J 37/02, B01D 53/88, C02F 1/48, B01J 21/06, C02F 1/32, C02F 1/72, C02F 101/30, C02F 101/34, C02F 101/36

(54) **METHOD FOR PREPARING COMPOSITE PARTICLES COMPRISING A MAGNETIC CORE AND A PHOTOCATALYTICALLY ACTIVE COATING, AND COMPOSITE PARTICLES OBTAINABLE BY SAID METHOD**
VERFAHREN ZUR HERSTELLUNG VON NANOVERBUNDPARTIKELN MIT EINEM MAGNETKERN UND EINER PHOTOKATALYTISCH AKTIVEN SCHICHT SOWIE MIT DEM VERFAHREN HERGESTELLTE NANOVERBUNDPARTIKEL
PROCÉDÉ DE PRÉPARATION DE PARTICULES NANOCOMPOSITES COMPRENANT UN NOYAU MAGNÉTIQUE ET UN REVÊTEMENT PHOTOCATALYTIQUEMENT ACTIF ; PARTICULES NANOCOMPOSITES OBTENUES PAR CE PROCÉDÉ

(30) Priority: 05.10.2015 EP 15188363
(43) Date of publication of application: 15.08.2018
(73) Proprietor: Universidad Del Pais Vasco Euskal Herriko Unibertsitatea, 48940 Leioa (Vizcaya) (ES)
(72) Inventor: LEIZA, José Ramón, 20018 Donostia-San Sebastián-Gipuzkoa (ES); ASUA, José María, 20018 Donostia-San Sebastián-Gipuzkoa (ES); GONZÁLEZ, Edurne, 20800 Zarautz-Gipuzkoa (ES); BONNEFOND, Audrey, 20018 Donostia-San Sebastián-Gipuzkoa (ES)
(74) Representative: ABG Intellectual Property Law, S.L.
(86) International application number: PCT/EP2016/073809
(87) International publication number: WO 2017/060311

(56) References cited:
- CN-B- 102 580 783
- US-A1- 2002 187 082
- US-A1- 2013 105 397

## Description

### TECHNICAL FIELD OF THE INVENTION

The present invention relates to a method for preparing composite particles having a core comprising magnetic nanoparticles and a coating comprising photocatalytic nanoparticles around the core. The present invention also relates to a dispersion comprising the composite particles obtainable by said method. These particles can be applied inter alia to degrade organic pollutants in the field of water treatment, air decontamination or as antibacterial coatings.

### BACKGROUND OF THE INVENTION

Since the industrial revolution, efforts for an effective decontamination of wastewater are increasing. While the traditional methods based on water filtration and disinfection were effective at removing many contaminants, they were unable to get rid of some harmful organic compounds present in many water supplies, including pharmaceutical drugs and various pathogenic microorganisms. Thus, there was and still there is a need for the development of more efficient procedures and that are capable of removing these pollutants.

In recent years, magnetic separation has been recognized as an important property for the simple deployment of micro and sub-microparticles into solution in the field of water treatment. In the patent review titled *"*Magnetically separable water treatment technologies and their role in future advanced water treatment: a patent review", which appeared in Clean - Soil, Air, Water, 2013, 41, 12, 1152-1156, Stuart Lindley, Timothy Leshuk and Frank X. Gu present and discuss significant recent developments involving magnetically separable particles for use in water treatment. The most common magnetic separation-based solutions projected for the decontamination of water appear to be contaminant adsorption or degradation. While both adsorptive and catalytic magnetic materials have been found to be highly promising in terms of their ability to remove pollutants from contaminated water, adsorptive magnetically separable technologies have the drawback that the particles have to be processed after water treatment in order to remove the adsorbed contaminants. Photocatalytic particles do not suffer from this issue since they adsorb and degrade the compounds in question, allowing photocatalytic, magnetically separable particles to be reused without any treatment between cycles. Accordingly, the authors conclude that magnetically separable particles for deploying photocatalytic material have enormous potential to enhance wastewater treatment. As it may be appreciated from this patent review, most of the strategies proposed for a more efficient wastewater decontamination with catalytic magnetic materials are based on the use of multilayered particles composed of a magnetic core and a photocatalyst coating, said particles being obtained by precipitation, sol-gel or dry-coating techniques.

However, one of the main problems associated with magnetic particles is their agglomeration. In addition, it has been reported that the direct contact of the magnetic particles with TiO₂ photocatalytic nanoparticles reduces the photocatalytic activity of the TiO₂ nanoparticles (*"*Novel Photocatalyst: Titania-Coated Magnetite. Activity and Photodissolution", Beydoun et al J. Phys. Chem. B 2000, 104, 4387-4396 ) likely due to the photodissolution process and that enhanced activity can be obtained when the magnetite and photoactive nanoparticles are separated by a layer of a non-conductive material like C or SiO₂ (*"*Deposition of anatase titania onto carbon encapsulated magnetite nanoparticles", Ao et al. Nanotechnology 2008, 19, 405604; *"*Magnetically recoverable hybrid TiO2 nanocrystal clusters with enhanced photocatalytic activity", Joo et al. Materials Letters 2013, 93, 141-144). Therefore it is of utmost importance to protect these magnetic particles against photodissolution, which normally involves functionalization and coating with certain protective layers around the magnetic core.

WO0061290A1 discloses the synthesis of a photocatalyst comprising: a core being at least partly formed of a magnetic material, an insulative layer disposed about the core (being formed of an electrically non-conductive material) and an outer layer disposed about the insulative layer (being formed of a semi-conductor having photocatalytic properties). Generally, the insulative layer is formed predominantly of silicon dioxide or silica or a derivative thereof, and it is understood that it prevents the contact of the magnetic core with the photocatalytic outer layer which ordinarily results in photo-induced dissolution of the core. The composite particles may be prepared by a precipitation method, a Chemical Vapor Deposition technique or by using Flame Aerosol Technology.

WO02098562A1 relates to magnetic photocatalyst composite particles composed of a magnetic substrate and a layer of photocatalyst particles. Preferably, a protection layer, such as a polymer (e.g. tetraethylfluoroethylene) is placed between the photocatalyst particles and the magnetic substrate to protect the magnetic material from harsh environments, such as acidic liquids or corrosive gases. The composite particles are preferably prepared using a dry mechanical particle coating technique, such as mechanofusion, and are employed in a fluidized bed reactor.

CN102580783A also describes that direct contact between a magnetic core and a photocalytic coating, such as TiO₂, produces light-induced dissolution of the particles, and therefore the presence of an insulating layer around the core becomes necessary to maintain the stability of the system and the photocatalytic performance. As an alternative to the common SiO₂-based insulating layers, the inventors propose to use polystyrene (PS) as an isolating layer between the magnetic core and the outer photocatalytic layer and particularly prepare a TiO₂/PS/Fe₃O₄ magnetic nanoparticle photocatalyst. The method used to prepare these particles is complex involving multiple steps: 1) preparing an oleic acid modified Fe₃O₄ nanoparticles; 2) preparing an aqueous magnetic fluid; 3) preparing a styrene miniemulsion; 4) preparing the magnetic polystyrene particles; and 5) preparing the magnetic photocatalysts TiO₂/PS/ Fe₃O₄. This last step involves itself several steps of washing with an organic alcohol, filtering and drying. In addition to the complexity of the synthetic method, the obtained particles show a very irregular morphology with TiO₂ in contact with Fe₃O₄, namely, the Fe₃O₄ is not embedded in the PS and hence it is prone to suffer stability.

In spite of this background, current commercial solutions for the treatment of water and air still involve the use of traditional O₃/H₂O₂ systems. Accordingly, there is still a need in the art to provide efficient alternative materials for wastewater purification and air decontamination, and methods to prepare them in an efficient and simple manner.

### BRIEF DESCRIPTION OF THE INVENTION

The inventors of the present invention have developed a method for preparing a dispersion of composite particles comprising a core formed by organically modified magnetic nanoparticles embedded in a polymeric material matrix and a coating formed by photocatalytic nanoparticles that overcomes the drawbacks defined above. The method of the invention is a single-step water-based Pickering miniemulsion polymerization which represents an easy and relatively low energy consumption method. Thus, the method of the invention is a less energetically demanding process than those described in the state of the art.

The resulting composite particles may be successfully employed in the degradation of organic pollutants since they have been found to provide a high catalytic activity, are easily recyclable by magnetic separation and show a suitable stability.

Thus, in a first aspect, the present invention is directed to a method 1 Z as defined in claim 1.

A further aspect of the present invention is directed to a dispersion as defined in claim 10.

A further aspect of the present invention is directed to composite as defined in claim 11.

A further aspect of the present invention is directed to the use as defined in claim 12

A further aspect of the present invention is directed to a method for degrading organic pollutants as defined in claim 13.

These and other aspects of the invention will be apparent from and elucidated with reference to the embodiments described hereinafter.

### BRIEF DESCRIPTION OF THE DRAWINGS

To better understand the invention, its objects and advantages, the following figures are attached to the specification in which the following is depicted:
**Figure 1** shows TEM micrographs of Magnetite/PS/TiO₂ composite particles obtained according to example 1.
**Figure 2** shows EDX analysis of an area present in the TEM micrograph of figure 1.
**Figure** 3 shows the results of the kinetics of methylene blue degradation using 0.1 g/L of the composite particles of example 1 (see also example 2).
**Figure 4** shows the magnetic recovery of the composite particles of example 1.
**Figure** 5 shows the degradation efficiency (circles) and the diameter (squares) of the composite particles of example 1 obtained during the recyclability tests.

### DETAILED DESCRIPTION OF THE INVENTION

### Method for preparing composite particles

It is an object of the present invention to provide an efficient and simple method for producing composite particles comprising a core comprising a polymeric material and organically modified magnetic nanoparticles embedded therein, and a coating comprising photocatalytic nanoparticles around the core.

In particular, the method of the present invention comprises a step (a) of providing an organic phase comprising an ethylenically unsaturated monomer, the organically modified magnetic nanoparticles, a co-stabilizer, a hydrophobe or a co-stabilizer/hydrophobe combination, and an aqueous phase comprising the photocatalytic nanoparticles.

The organic phase of step (a) of the method of the present invention comprises an ethylenically unsaturated monomer.

In a preferred embodiment, the ethylenically unsaturated monomer is selected from the group consisting of styrenes, (meth)acrylates, (meth)acrylonitriles, (meth)acrylamides, ethylenically unsaturated heterocycles, vinyl esters, vinyl halides, allyl alcohols, allyl polyethers and alkenes.

In the context of the present invention, the terms "(meth)acrylates", "(meth)acrylonitriles" and "(meth)acrylamides" are intended to cover both the acrylate, acrylonitrile, acrylamide compounds and the respective methacrylate, methacrylonitrile, methacrylamide compounds.

In a more preferred embodiment, the ethylenically unsaturated monomer is selected from the group consisting of:
(i) alkyl(meth)acrylates of linear, branched or cycloaliphatic alcohols comprising 1 to 22 carbon atoms, such as methyl(meth)acrylate, ethyl(meth)acrylate,n-butyl(meth)acrylate, iso-butyl(meth)acrylate, tert-butyl(meth)acrylate, lauryl(meth)acrylate, 2-ethylhexyl(meth)acrylate, stearyl(meth)acrylate, cyclohexyl(meth)acrylate, isobornyl(meth)acrylate, tert-butyl(meth)acrylate;
(ii) aryl(meth)acrylates, particularly wherein the aryl radicals may be each unsubstituted or substituted with up to four substituents, such as benzyl(meth)acrylate or phenylacrylate;
(iii) (meth)acrylic acids, citraconic acid, crotonic acid, cinnamic acid, maleic acid and salts, anhydrides and esters thereof;
(iv) hydroxyalkyl(meth)acrylates of linear, branched or cycloaliphatic diols comprising 2 to 36 carbon atoms, such as 3-hydroxypropyl(meth)acrylate, 3,4-dihydroxybutylmono(meth)acrylate, 2-hydroxyethyl(meth)acrylate, 4-hydroxybutyl(meth)acrylate, 2-hydroxypropyl(meth)acrylate, 2,5-dimethyl-1,6-hexandiolmono(meth)acrylate;
(v) mono(meth)acrylates of ethers, polyethyleneglycols, polypropyleneglycols or mixed polyethylene/propylene glycols each comprising 5 to 80 carbon atoms, such as tetrahydrofurfuryl(meth)acrylate, methoxyethoxyethyl(meth)acrylate, 1-butoxypropyl(meth)acrylate, cyclohexyloxymethyl(meth)acrylate, methoxymethoxyethyl(meth)acrylate, benzyloxymethyl(meth)acrylate, furfuryl(meth)acrylate, 2-butoxyethyl(meth)acrylate, 2-ethoxyethyl(meth)acrylate, allyloxymethyl(meth)acrylate, 1 -ethoxybutyl(meth)acrylate, 1 -ethoxyethyl(meth)-acrylate, ethoxymethyl(meth)acrylate, poly(ethyleneglycol)methylether(meth)acrylate, poly(propyleneglycol)methylether(meth)acrylate;
(vi) caprolactone- and/or valerolactone-modified hydroxyalkyl(meth)acrylates, particularly derived from linear, branched or cycloaliphatic diols comprising 2 to 8 carbon atoms;
(vii) aminoalkyl(meth)acrylates, such as N,N-dimethylaminoethyl(meth)acrylate, 2-trimethylammoniumethyl(meth)acrylatchloride and N,N-dimethylaminopropyl(meth)acrylate;
(viii) (meth)acrylates of halogenated alcohols, such as perfluoroalkyl(meth)acrylates comprising 6 to 20 atoms;
(ix) oxiranyl(meth)acrylates, such as 2,3-epoxybutyl(meth)acrylate, 3,4-epoxybutyl-(meth)acrylate and glycidyl (meth) acrylate;
(x) styrene and substituted styrenes, such as α-methylstyrenes, 4-methylstyrenes, 4-vinylbenzoic acid and sodium-4-vinylbenzene sulfonate;
(xi) (meth)acrylonitrile;
(xii) ethylenically unsaturated heterocycles, such as 4-vinylpyridine, vinylimidazole, 1-[2-((meth)acryloyloxy)-ethyl]-2-imidazolidinone, N-vinylpyrrolidone and N-vinylcaprolactam;
(xiii) vinylesters of carboxylic acids comprising 1 to 20 carbon atoms, such as vinylacetate;
(xiv) vinylesters of versatic acids;
(xv) (meth)acrylamide;
(xvi) N-alkyl- and N,N-dialkyl-substituted (meth)acrylamides comprising linear, branched or cycloaliphatic alkyl groups comprising 1 to 22 carbon atoms, especially N-(tert-butyl)acrylamide and N,N-dimethylacrylamide;
(xvii) silyl containing (meth)acrylates, such as (meth)acrylic acid(trimethylsilylester) and (meth)acrylic acid-[3- trimethylsilyl)-propylester];
(xviii) allyl alcohol and polyethers thereof comprising 5 to 80 carbon atoms;
(xix) alkenes, such as 1-hexene, 1-heptene, 1-octene, 1-nonene, 1-decene, 1-undecene and 1-dodecene;
(xx) vinyl halides, such as vinyl chloride;
   and combinations thereof.

The organic phase of step (a) of the method of the present invention further comprises organically modified magnetic nanoparticles.

The organically modified magnetic nanoparticles of the method of the present invention are previously prepared by methods well-known by the skilled person as precipitation methods, mechanochemical processing methods, comminution methods, sol-gel methods, hydrothermal or solvothermal methods, physical vapour deposition methods, chemical vapour deposition methods, flame pyrolysis methods, decomposition methods or combustion synthesis.

Magnetic nanoparticles useful in the method of the present invention include, without limitation, nanoparticles of metal or semimetal oxides, metal or semimetal hydroxides, metal or semimetal oxyhydroxides, metal or semimetal carbides, metal or semimetal nitrides, metal or semimetal sulphides, metal or semimetal tellurides, metal or semimetal selenides, metal or semimetal halides, metal or semimetal carbonates, metal or semimetal phosphates, metal or semimetal sulphates, metal or semimetal silicates, metal or semimetal borates, metal or semimetal vanadates, metal or semimetal tungstates, metal or semimetal aluminates or combinations thereof.

In a preferred embodiment, the magnetic nanoparticles are nanoparticles of metal or semimetal oxides, metal or semimetal hydroxides, metal or semimetal oxyhydroxides, or combinations thereof.

Examples of metals in the above compounds useful in the magnetic nanoparticles of the method of the present invention include, without limitation, iron, cobalt, manganese, zinc, gadolinium and combinations thereof.

In a more preferred embodiment, the magnetic nanoparticles are nanoparticles of Fe₃O₄, Fe₂O₃, BaO(Fe₂O₃)₆, SrO(Fe₂O₃)₆, AlNiCo, FeO(OH), Fe(OH)₃, or combinations thereof, even more preferably, the magnetic nanoparticles are nanoparticles of Fe₃O₄ (magnetite).

The surface of the magnetic nanoparticles is modified with an organic compound (organic modifier).

Without being bond to any theory it is believed that the organic modification of the surface of the magnetic nanoparticles improves the dispersion of said nanoparticles in the organic phase.

The organic modifier for the magnetic nanoparticles is selected from the group consisting of fatty acids, silanes, acetic acid, polyvinyl amines, sulfonic acid derivatives, polyvinyl alcohols, polyesters, polyethers, polyphosphates, polyurethanes, alkylammonium salts, polymers and copolymers having acidic groups, especially carboxylic groups, optionally modified acrylate block copolymers, optionally modified polyurethanes, polymers and copolymers having fatty acid radicals, optionally modified polyesters, such as acid-functionalized polyesters, polyphosphates, optionally modified polyethers and mixtures thereof.

The organic phase of step (a) of the method of the present invention further comprises a co-stabilizer, a hydrophobe or a combination of a co-stabilizer and a hydrophobe. Without being bond to any theory it is believed that the co-stabilizer avoids or minimizes the degradation of the droplets by diffusion of the monomer from small to large droplets (known as "Ostwald ripening").

In the context of the present invention the term "co-stabilizer" refers to a compound with molecular weight smaller than 2,000 Da and water solubility (measured at 25°C) smaller than 1x10⁻³wt/wt %..

These co-stabilizers can be "non-reactive co-stabilizers", which do not react or polymerize, such as hexadecane and cetyl alcohol, and "reactive co-stabilizers" which covalently attach to the polymer, such as oil-soluble initiators such as benzoyl peroxide or lauryl peroxide, chain transfer agents such as long alkyl (n>10) mercaptans such as n-dodecyl mercaptan, and hydrophobic monomers such as lauryl (meth)acrylate, estearil (meth)acrylate, octadecyl (meth)acrylate, dodecyl (meth)acrylate.

In a preferred embodiment, the co-stabilizer is a reactive co-stabilizer, preferably selected from oil-soluble initiators, chain transfer agents and hydrophobic monomers.

Without being bond to any theory it is believed that the hydrophobe also helps in reducing Ostwald-ripening and maintaining the stability of the droplets.

In the context of the present invention the term "hydrophobe" refers to a compound with a molecular weight higher than 2,000 Da and water solubility (measured at 25°C) smaller than 1x10⁻³ wt/wt%.

Examples of hydrophobes useful for the method of the invention are for instance polymers including, without limitation, polyesters, polystyrenes, phenolics, poly(meth)acrylates, polyamines, polyimides, polyepoxides, polyurethanes and combinations and copolymers thereof.

The aqueous phase of step a) of the method comprises photocatalytic nanoparticles.

The photocatalytic nanoparticles of the method of the present invention are previously prepared by methods well-known by the skilled person as precipitation methods, mechanochemical processing methods, comminution methods, sol-gel methods, hydrothermal or solvothermal methods, physical vapour deposition methods, chemical vapour deposition methods, flame pyrolysis methods, decomposition methods or combustion synthesis.

Photocatalytic nanoparticles useful in the method of the present invention include, without limitation, nanoparticles of metal or semimetal oxides, metal or semimetal oxide hydroxides, metal or semimetal halides, metal or semimetal silicates, metal or semimetal borates, metal or semimetal vanadates, metal or semimetal tungstates, metal or semimetal aluminates, alkaline earth metal sulfates, alkaline earth metal phosphates, alkaline earth metal carbonates, alkaline earth metal silicates, alkaline earth metal nitrates, alkaline earth metal halides, clays, apatites, zeolites, graphenes, carbon nanotubes, carbon blacks, silver metal as well as combinations, mixtures and alloys thereof.

In a preferred embodiment, the photocatalytic nanoparticles are nanoparticles of metal or semimetal oxides, metal or semimetal hydroxides, metal or semimetal oxyhydroxides, or combinations thereof.

Examples of metal oxides, metal hydroxides and metal halides in the above compounds useful in the photocatalytic nanoparticles of the method of the present invention include, without limitation, TiO₂, ZnO, Al₂O₃, , CeO₂, Fe₂O₃, Fe₃O₄, Al(OH)₃, AI(O)OH, YVO₄, NaYF₄:Yb₃Er, YbF, CaF₂, SnO₂:Sb₂O₃, CePO₄, LaPO₄, Zn₃(PO₄)₂, Ba(TiO₃), ln₂O₃:SnO₂, Cu₂O, CuO₂, CaWO₄, Yb₂(WO₄)₃, Y₂(WO₄)₃, CdS, ZnS, AIN, Si₃N₄, SiC, as well as combinations, mixtures and alloys thereof.

In a preferred embodiment, the photocatalytic nanoparticles are nanoparticles of metal or semimetal oxides, metal or semimetal hydroxides or combinations thereof, more preferably TiO₂, ZnO, Al₂O₃, CeO₂, Fe₂O₃, Fe₃O₄, Al(OH)₃,Al(O)OH or combinations thereof.

In a particular embodiment, the photocatalytic nanoparticles of the present invention are doped.

Examples of dopants useful in the method of the invention include, without limitation, rare earth metals, especially lanthanoids.

In a particular embodiment, the amount of dopant in the photocatalytic nanoparticles is from 0 to 80 mol%, more preferably from 0 to 60 mol%, even more preferably from 0 to 40 mol%, based on the total amount of photocatalytic nanoparticles.

The surface of the photocatalytic nanoparticles can be modified with an organic compound (organic modifier).

Without being bond to any theory it is believed that the organic modification of the surface of the photocatalytic nanoparticles improve the adsorption of said nanoparticles at the organic/aqueous phase interface.

In a preferred embodiment, the organic modifier for the photocatalytic nanoparticles is selected from the group consisting of fatty acids, silanes, sulfonic acid derivatives, polymer and/or copolymers having functional groups with affinity to photocatalytic particle, polyesters and polyethers.

In a more preferred embodiment, the organic modifier for the photocatalytic nanoparticles is selected from the group consisting of fatty acids, silanes, acetic acid, polyvinyl amines, sulfonic acid derivatives, polyvinyl alcohols, polyesters, polyethers, polyphosphates, polyurethanes, alkylammonium salts, polymers and copolymers having acidic groups, especially carboxylic groups, optionally modified acrylate block copolymers, optionally modified polyurethanes, polymers and copolymers having fatty acid radicals, optionally modified polyesters, such as acid-functionalized polyesters, polyphosphates, optionally modified polyethers and mixtures thereof.

In addition, the method of the present invention further comprises a step (b) of mixing the organic phase with the aqueous phase from step (a) as defined above and providing energy to the resulting mixture to produce a miniemulsion.

The term "miniemulsion" refers to a dispersion of droplets, in this case, of the monomer and magnetic nanoparticles

In a preferred embodiment, the miniemulsion is a Pickering miniemulsion. By "Pickering" it is understood that the miniemulsion is stabilized by solid particles which adsorb onto the interface between the continuous and dispersed phase. In the present invention, the photocatalytic nanoparticles serve to stabilize the droplets.

The energy is provided by mechanical devices, such as static mixers, rotor-stator systems, sonifiers and high-pressure homogenizers, or by methods based on the chemical potential of the components (low energy emulsification methods) such as the phase inversion temperature method.

Static mixers rely on droplet elongation followed by collision with the leading edges and crosspoints of the bars of the static mixer (Liu et al, Cand J. Chem. Eng. 2008, 83, 793) rotor-stator systems (e.g., Ultra Turrax, Omni mixers) rely on turbulence to produce the emulsification. The minimum droplets size that can be achieved with this type of equipment depends on the size of the smallest turbulent eddy formed, which in turn depends on the geometry of the rotor-stator system on the rotation speed.

The sonifiers produce ultrasound waves that cause the molecules to oscillate about their main position as the waves propagate. During the compression cycle, the average distance between the molecules decreases, whilst during rarefaction the distance increases. The rarefaction results in a negative pressure that may cause the formation of voids or cavities that may grow in size. In the succeeding compression cycle of the wave, the bubbles are forced to contract and may even disappear totally. The shock waves produced on the total collapse of the bubbles cause the breakup of the surrounding monomer droplets. A problem associated with the sonifier is that only a small region of the fluid around the sonifier tip is directly affected by the ultrasound waves. In order to be broken up, the monomer droplets should pass through this region. Therefore, when sonication is used to form the miniemulsion, addition stirring must be used to allow all the fluid to pass through the sonication region.

In the high pressure homogenizers, the coarse emulsion is passed through the narrow gap of a valve. At the entrance of the gap, the droplets suffer elongational flow and the elongated droplets are broken up by the turbulence created at the exit of the gap. The average droplet size decreases and the droplet size distribution (DSD) becomes narrower as the number of passes through the high-pressure homogenizer increases. The effect is more pronounced in the first passes and it has been found that the number of passes can be considerably reduced if the coarse emulsion is first sonified.

In a preferred embodiment, the energy is provided by mechanical devices, more preferably by high-pressure homogenizers (for example, Manto-Gaulin homogenizer and Microfluidizer are described in the literature as the most efficient techniques in terms of achieving the smallest droplet sizes (Lopez et al. Ind. Eng. Chem. Res. 2008), 47, 6289-6297). These equipments have in common that the coarse dispersions are pressurized using a positive displacement pump, and flow through a narrow gap at high velocity. A strong pressure drop also occurs.

In a preferred embodiment, the miniemulsion comprises droplets having droplet size distribution in the range 20-1500 nm, most preferably in the range 50-800 nm, and even most preferably in the range 80-700 nm.

Without being bond to any theory it is believed that the photocatalytic nanoparticles of the aqueous phase of the method of the present invention stabilize the formed monomer droplets by being located in the monomer/water interface with a specific three phase contact angle. In a preferred embodiment, the photocatalytic nanoparticles are located with a three phase contact angle in the range 30° to 120°; most preferably in the range 50° to 100°; and even most preferably in the range 50° to 90°.

The method of the invention further comprises a step (c) of adding a polymerization initiator, wherein the polimerization initiator is added to either the organic phase as defined in the previous step (a), to the aqueous phase as defined in the previous step (a) or to the miniemulsion resulting from step (b) and heating to polymerize the monomer.

In the context of the present invention, the term "polymerization initiators" comprises thermal initiators, redox initiators, photo-initiators or combinations thereof. It also comprises either oil- and/or water-soluble initiators.

Examples of thermal initiators useful for the method of the invention are, without limitation, peroxides as potassium or ammonium persulfates, tert-butyl hydroperoxide, cumene hydroperoxide, tert-butyl perbenzoate, tert-butyl 2-ethyl perhexanoate, hydrogen peroxide and benzoyl peroxide, as well as azo-compounds such as azobis(2-methylpropionamide)dihydrochloride, azobisisobutyronitrile, 4,4'-azobis(4-cyanovaleric acid), 1,1'-azobis(cyclohexanecarbonitrile), 2,2'-azobis(2-methylpropionitrile), 1-[(1-cyano-1-methylethyl)azo]formamide.

In a preferred embodiment, the polymerization initiator is an azo-compound, more preferably is 2,2'-azobis(2-methylpropionitrile).

Examples of redox initiators useful for the method of the invention include, but are not limited to, inorganic peroxides paired with a suitable reducing agent such as sulfites, metabisulfites, sodium dithionite, sodium thiosulfate, sodium formaldehydesulphoxylate, a mixture of disodium salt of 2-hydroxy-2-sulphinoacid, of sodium sulphite and of disodium salt of 2-hydroxy-2-sulphoacid, or a mixture of disodium salt of hydroxysulphinoacetic acid and of disodium salt of hydroxysulphoacetic acid, sold respectively under the names of Bruggolite FF6 and Bruggolite FF7 by Bruggemann; and tert-butyl hydroperoxide and hydrogen peroxide paired with ascorbic acid, Bruggolite FF6 and Bruggolite FF7.

Upon producing the miniemulsion containing the polymerization initiator the miniemulsion is heated to generate radicals that initiate the polymerization.

As a consequence, a Pickering miniemulsion polymerization takes place i.e. the monomer contained inside the droplets polymerizes to form a polymer with the magnetic nanoparticles embedded therein, and said core remains stabilized by the photocatalytic nanoparticle coating/layer, thus forming the composite particles of the invention.

In a preferred embodiment, the weight ratio between the monomer contained inside the droplets and the magnetic nanoparticles embedded therein is from 99.9-0.1 to 20-80, preferably from 99.5-0.5 to 50-50, more preferably from 99-1 to 60-40, even more preferably from 98.5-1.5 to 80-20 and even more preferably from 98-2 to 85-15.

In a preferred embodiment, the polymerization is performed in a temperature range from 5 to 200°C, more preferably from 10 to 180°C, more preferably from 15 to 100°C, even more preferably from 20 to 90°C.

In another preferred embodiment, the polymerization is performed for a duration in the range from 0.01 to 48 hours, preferably from 0.1 to 24 hours, more preferably 0.2 to 12 hours, even more preferably 0.5 to 10 hours.

### Composite particles

A further aspect of the present invention is directed to a dispersion as defined in the appended claims.

It is another object of the present invention to provide an efficient and stable material for the degradation of organic pollutants which can be separated magnetically.

In particular, the present invention provides composite particles as defined in the appended claims.

As may be appreciated, the presence of a protective or insulating layer between the magnetic core and the photocatalytically active layer is not essential to avoid photodissolution of the magnetic particles.

In a preferred embodiment, the composite particles of the invention do not comprise a protective or insulating coating around the magnetic core.

The photocatalytic nanoparticles allow for the degradation of organic pollutants under light radiation exposure and the magnetic nanoparticles permit easy recovery by 20 magnetic separation.

The term "composite material" refers to a material made from two or more constituent materials with significantly different physical or chemical properties, that when combined, produce a material with characteristics different from the individual components. The individual components remain separate and distinct within the 25 finished structure. In the context of the present invention, the different constituent materials are inorganic nanoparticles (of two types: magnetic and photocatalytic) and a polymeric material matrix.

The composite material particles of the present invention comprise a core comprising a polymeric material matrix that is formed by the polymerization of the ethylenically 30 unsaturated monomer included in the organic phase of the method of the present invention as described above.

Furthermore, the composite material particles of the present invention comprise magnetic nanoparticles embedded in the polymeric material matrix as defined above.

In the context of the present invention, the term "nano" refers to particles with at least one dimension below 1000 nm in size.

The magnetic nanoparticles have an average particle size from 0.1 to 1000 nm, preferably from 0.5 to 850 nm, more preferably in the range from 1 to 600 nm, even more preferably from 2 to 500 nm, even more preferably from 5 to 300 nm.

In another preferred embodiment, the magnetic nanoparticles have a granular, spherical, elongated or plate-like shape, preferably spherical shape.

The surface of the magnetic material nanoparticles is organically modified. Procedures for modifying magnetic materials are known by the skilled person (BR102012025890A2; *"*Surface-initiated atom transfer radical polymerization of magnetite nanoparticles with statistical poly(tert-butyl acrylate)-poly(poly(ethylene glycol) methyl ether methacrylate) copolymers", Kanhakeaw, P. et al. J. Nanomat. 2015, 121369/1-121369/11; *"*Preparation and characterization of magnetic polymeric composite particles by miniemulsion polymerization" by Lu S. et al. J. Polym. Sci., Part A: Polym. Chem. 2006, 44, 4187-4203; *"*Surface modification of superparamagnetic magnetite nanoparticles and their intracellular uptake", Yong Z. et al. Biomater. 2002, 23(7), 1553-61).

In the context of the present invention, the term "embedded" refers to incorporated particles into a surrounding mass, e.g. magnetic nanoparticles incorporated into the polymeric material matrix.

Moreover, the composite material particles of the present invention comprise a coating of photocatalytic nanoparticles around the core.

In the context of the present invention the term "coating" refers to a layer that is applied to the surface of the core. The coating itself may be an all-over coating, completely covering the core, or it may only cover parts of the core.

The purpose of applying the coating of the present invention is functional. In particular, the coating of the present invention comprises photocatalytic nanoparticles as defined above. The photocatalytic nanoparticles have an average particle size from 0.1 to 1000 nm, preferably from 0.5 to 800 nm, more preferably from 1 to 600 nm, even more preferably from 2 to 400 nm, even more preferably from 5 to 200 nm.

In another preferred embodiment, the photocatalytic nanoparticles have a granular, spherical, elongated or plate-like shape.

According to a particular embodiment, the composite particles in the dispersion have average particle sizes in the range from 50 to 1500 nm, preferably in the range from 100 to 1000 nm, more preferably in the range from 200 to 800 nm, more preferably in the range from 300 to 750 nm, even more preferably in the range from 300 to 600 nm. The term "average particle size" refers to D50 value which is the diameter where half of the population lies below this value. The determination of the particle sizes may be performed according to any conventional manner well known to the skilled in the prior art, such as by light-scattering, transmission electron microscopy, capillary hydrodynamic fractionation chromatography and analytical ultracentrifugation. According to another particular embodiment, the composite particles are spherical. Due to their size and morphology the composite particles of the present invention present an optimal total surface area in contact with the reactant to be degraded and thus being highly effective as photocatalyst.

### Uses of composite particles

Another aspect of the present invention is directed to the use of the composite particles as defined herein to degrade organic pollutants in water treatment, air decontamination or as antibacterial coating.

The synthesized composite particles can be applied dispersed in the dispersion medium used in the method of the invention or once separated from the dispersion medium as powders.

The term "organic pollutants" mainly refers to toxic and/or not biodegradable organic substances, including pesticides, pharmaceuticals and personal care products. Non-limitative examples of organic pollutants which can be degraded by the composite material particles of the present invention are alkanes, aliphatic and aromatic carboxylic acids, aliphatic and aromatic halogenated compounds, alkenes, phenols, amines, surfactants, heterocyclic compounds.

Thus, another object of the present invention is directed to a method for degrading organic pollutants that are present in an aqueous medium, as defined in the appended claims. Z

In order to degrade the organic pollutants, the aqueous medium containing the composite material particles of the present invention should be exposed to light radiation, which may be sun-light or artificial light. In a preferred embodiment, the light radiation is UV radiation.

Afterwards, the composite particles are magnetically separated from the exposed aqueous medium. Thus, the composite material particles of the present invention can be reused without any treatment between cycles.

Apart from being useful for water treatment and air decontamination, the particles of the invention may find also application in other fields, for instance, as an antibacterial coating.

All the features described in this specification (including the claims, description and drawings) and/or all the steps of the described method can be combined in any combination, with the exception of combinations of such mutually exclusive features and/or steps.

The invention will be further illustrated by means of examples, which should not be interpreted as limiting the scope of the claims.

### EXAMPLES

### Example 1 - Preparation of Magnetite/PS/TiO₂ composite material particles

An organic phase containing 6 g of styrene, 0.6 g of hexadecane and 0.6 g of magnetite organically modified with oleic acid was mixed separately from an aqueous phase containing 45 g of water and 10 g of a TiO₂ dispersed in the water. The aqueous phase was then sonified using a Branson 450w (operating at 100% amplitude and 80% duty cycle) in order to improve the TiO₂ dispersion in water and the final size of the TiO₂ nanoparticles was around 24 nm. Then, the organic phase and the aqueous phase were mixed together for 5 minutes and then sonified for 10 minutes. During sonication, the flask was immersed in an iced bath to avoid overheating.

0.24 g of azoisobutironitrile (AIBN) initiator were added to the miniemulsion that was transferred into a 0.1 L glass bottle and purged with nitrogen for 10 minutes. Finally the bottle was sealed and introduced into the thermostatic bath at 70 °C where it was tumbled end-over-end at 49 rpm for 15 hours.

The intensity average droplet size measured by dynamic light scattering for the miniemulsion was 584 nm and the intensity average particle size of the composite particle dispersion was 516 nm.

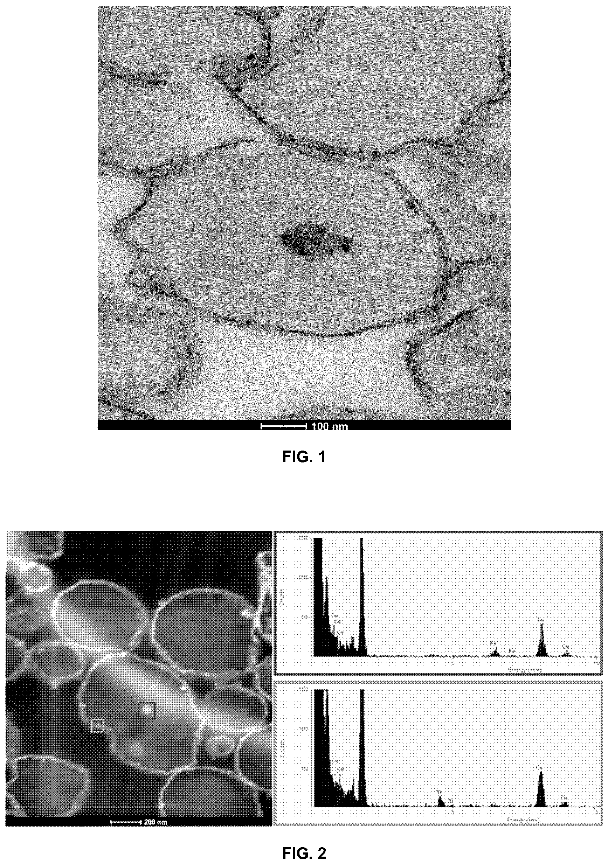

Figure 1 shows TEM micrographs of the composite Magnetite/PS/TiO₂ particles, embedded in an epoxy resin. The TEM micrograph shows that magnetite aggregates were embedded in the polymer material matrix and that all polymer particles were covered by a layer of TiO₂ nanoparticles. This was confirmed by EDX analyses, in Figure 2, which demonstrated that the darker nanoparticles observed within the polymeric coating in the TEM micrograph contained iron.

### Example 2 - Water treatment application

In order to assess the photocatalytic activity of the composite Magnetite/PS/TiO₂ particles, 0.1 g/L of composite particles were mixed with an aqueous solution of methylene blue (MB) in order to have an initial MB concentration of 10⁻⁵ M. Then, the dispersion was placed under mercury UV lamps with a total power of 0.68 mW/cm². Then, the composite polymer particles were magnetically separated from the dispersion and the MB concentration in the supernatant was determined by UV absorbance measurements.

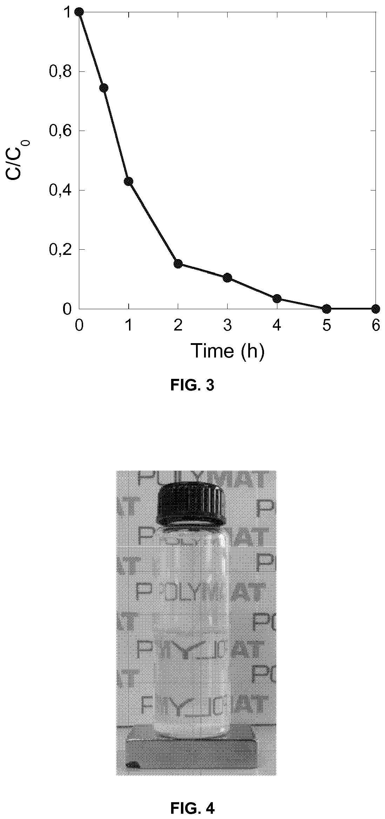

Figure 3 presents the results of the kinetics of the photocatalytic activity of the composite polymer particles during the first cycle. It was observed that the MB concentration decreased with the irradiation time signifying that the TiO₂ nanoparticles present at the surface of the hybrid polymer particles were effectively degrading the MB through a photocatalytic process. After only 5 hours of irradiation, the degradation of MB was total. This shows that the hybrid polymer particles synthesized exhibit good photocatalytic activity.

### Example 3 - Magnetic recovery

In order to determine the recovery of these composite particles, the dispersions containing methylene blue (MB) obtained in the previous example were placed close to a magnet. After 6 hours, it was observed that the hybrid polymer particles were completely recovered (see Figure 4). This was also confirmed by absorbance measurements where no peak corresponding to the hybrid particles was observed in the supernatant.

### Example 4 - Recyclability of the composite particles

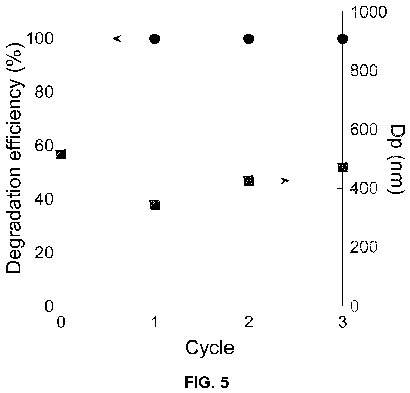

The composite particles were subjected to three cycles of mixing with an aqueous phase containing MB, exposing the resulting medium to mercury lamps (total power 0.68 mW/cm²) during 6 hours, magnetic recovery and redispersion by sonication (for 5 minutes using a Branson 450w operating at 100% amplitude and 80% duty cycle). Figure 5 shows that complete degradation of MB was achieved in the three cycles. Figure 5 also shows that particle size was maintained during the cycles.

## Claims

1. A method for producing a dispersion comprising composite particles, wherein the composite particles comprise
- a core comprising a polymeric material matrix and organically modified magnetic nanoparticles embedded within said matrix, wherein the magnetic nanoparticles have an average particle size from 0.1 to 1000 nm and are organically modified with an organic modifier selected from the group consisting of fatty acids, silanes, acetic acid, polyvinyl amines, sulfonic acid derivatives, polyvinyl alcohols, polyesters, polyethers, polyphosphates, polyurethanes, alkylammonium salts, polymers and copolymers having acidic groups, especially carboxylic groups, optionally modified acrylate block copolymers, optionally modified polyurethanes, polymers and copolymers having fatty acid radicals, optionally modified polyesters, such as acid-functionalized polyesters, polyphosphates, optionally modified polyethers and mixtures thereof, and
- a coating comprising photocatalytic nanoparticles around the core having an average particle size from 0.1 to 1000 nm, and
wherein the method comprises the following steps:
a) providing an organic phase comprising an ethylenically unsaturated monomer, the organically modified magnetic nanoparticles, a co-stabilizer, wherein the co-stabilizer is a compound with molecular weight smaller than 2,000 Da and water solubility measured at 25°C smaller than 1x10⁻³ wt/wt %, a hydrophobe, wherein the hydrophobe is a compound with molecular weight higher than 2,000 Da and water solubility measured at 25°C smaller than 1x10⁻³ wt/wt %, or a co-stabilizer/hydrophobe combination, and an aqueous phase comprising the photocatalytic nanoparticles,
b) mixing the organic phase with the aqueous phase from step (a) and providing energy by mechanical devices or by methods based on the chemical potential of the components to the resulting mixture to produce a dispersion of droplets of the monomer and magnetic nanoparticles, and
c) adding a polymerization initiator selected from thermal initiators, redox initiators, photo-initiators and combinations thereof and selected from oil- and water-soluble initiators, wherein the polimerization initiator is added to either the organic phase as defined in the previous step (a), to the aqueous phase as defined in the previous step (a) or to the dispersion of droplets of the monomer and magnetic nanoparticles resulting from step (b) and heating to polymerize the monomer.

2. The method according to claim 1 wherein the ethylenically unsaturated monomer is selected from the group consisting of styrenes, (meth)acrylates, (meth)acrylonitriles, (meth)acrylamides, ethylenically unsaturated heterocycles, vinyl esters, vinyl halides, allyl alcohols, allyl polyethers and alkenes.

3. The method according to any of claims 1 to 2 wherein the magnetic nanoparticles are nanoparticles formed of metal or semimetal oxides, metal or semimetal hydroxides, metal or semimetal oxyhydroxides, or combinations thereof.

4. The method according to claim 3 wherein the magnetic nanoparticles are nanoparticles of Fe₃O₄, Fe₂O₃, BaO(Fe₂O₃)₆, SrO(Fe₂O₃)₆, AlNiCo, FeO(OH), Fe(OH)₃, or combinations thereof.

5. The method according to any of claims 1 to 4 wherein the photocatalytic nanoparticles are nanoparticles formed of metal or semimetal oxides, metal or semimetal hydroxides, metal or semimetal oxyhydroxides, or combinations thereof.

6. The method according to claim 5 wherein the photocatalytic nanoparticles are nanoparticles formed of TiO₂, ZnO, Al₂O₃, CeO₂, Fe₂O₃, Fe₃O₄, Al(OH)₃, AI(O)OH or combinations thereof.

7. The method according to any of claims 1 to 6 wherein the photocatalytic nanoparticles are organically modified with a modifier selected from fatty acids, silanes, acetic acid, polyvinyl amines, sulfonic acid derivatives, polyvinyl alcohols, polyesters, polyethers, polyphosphates, polyurethanes, alkylammonium salts, polymers and copolymers having acidic groups, especially carboxylic groups, optionally modified acrylate block copolymers, optionally modified polyurethanes, polymers and copolymers having fatty acid radicals, optionally modified polyesters, such as acid-functionalized polyesters, polyphosphates, optionally modified polyethers and mixtures thereof.

8. The method according to any of claims 1 to 7 wherein the photocatalytic nanoparticles are doped.

9. The method according to any of claims 1 to 8 wherein the co-stabilizer of the organic phase of step (a) is a co-stabilizer which covalently attach to the polymer and it is selected from benzoyl peroxide, lauryl peroxide, alkyl mercaptans having n>10, lauryl (meth)acrylate, stearyl (meth)acrylate, octadecyl (meth)acrylate and dodecyl (meth)acrylate.

10. A dispersion comprising composite particles obtainable by the method according to any one of claims 1 to 9, wherein the composite particles comprise
- a core comprising a polymeric material and organically modified magnetic nanoparticles embedded therein, wherein the magnetic nanoparticles have an average particle size from 0.1 to 1000 nm and are organically modified with an organic modifier selected from the group consisting of fatty acids, silanes, acetic acid, polyvinyl amines, sulfonic acid derivatives, polyvinyl alcohols, polyesters, polyethers, polyphosphates, polyurethanes, alkylammonium salts, polymers and copolymers having acidic groups, especially carboxylic groups, optionally modified acrylate block copolymers, optionally modified polyurethanes, polymers and copolymers having fatty acid radicals, optionally modified polyesters, such as acid-functionalized polyesters, polyphosphates, optionally modified polyethers and mixtures thereof, and
- a coating comprising photocatalytic nanoparticles around the core having an average particle size from 0.1 to 1000 nm.

11. Composite particles comprising:
- a core comprising a polymeric material matrix and organically modified magnetic nanoparticles embedded within said matrix, wherein the magnetic nanoparticles have an average particle size from 0.1 to 1000 nm and are organically modified with an organic modifier selected from the group consisting of fatty acids, silanes, acetic acid, polyvinyl amines, sulfonic acid derivatives, polyvinyl alcohols, polyesters, polyethers, polyphosphates, polyurethanes, alkylammonium salts, polymers and copolymers having acidic groups, especially carboxylic groups, optionally modified acrylate block copolymers, optionally modified polyurethanes, polymers and copolymers having fatty acid radicals, optionally modified polyesters, such as acid-functionalized polyesters, polyphosphates, optionally modified polyethers and mixtures thereof, and
- a coating comprising photocatalytic nanoparticles around the core having an average particle size from 0.1 to 1000 nm.

12. Use of the composite particles as defined in claim 11 to degrade organic pollutants in water treatment, air decontamination or as antibacterial coating.

13. A method for degrading organic pollutants that are present in an aqueous medium, said method comprising the following steps:
- adding the composite particles as defined in claim 11 to the aqueous medium;
- exposing the resulting medium from the previous step to light radiation so that the organic pollutants are degraded; and
- magnetically separating the composite particles from the aqueous medium.

## Patentansprüche

1. Ein Verfahren zur Herstellung einer Dispersion, die Verbundteilchen umfasst, wobei die Verbundteilchen umfassen
- einen Kern, der eine Polymermaterial-Matrix und organisch modifizierte, magnetische Nanopartikel umfasst, die in der Matrix eingebettet sind, wobei die magnetischen Nanopartikel eine durchschnittliche Partikelgröße von 0,1 bis 1000 nm haben und organisch modifiziert sind mit einem organischen Modifikator ausgewählt aus der Gruppe bestehend aus Fettsäuren, Silanen, Essigsäuren, Polyvinylaminen, Sulfonsäurederivaten, Polyvinylalkoholen, Polyestern, Polyethern, Polyphosphaten, Polyurethanen, Alkylammoniumsalzen, Polymeren und Copolymeren mit sauren Gruppen, insbesondere Carboxylgruppen, optional modifizierten Acrylat-Blockcopolymeren, optional modifizierten Polyurethanen, Polymeren und Copolymeren mit Fettsäure-Radikalen, optional modifizierten Polyestern, wie z.B. säurefunktionalisierten Polyestern, Polyphosphaten, optional modifizierten Polyethern und Mischungen davon, und
- eine Beschichtung um den Kern herum, die photokatalytische Nanopartikel umfasst, mit einer mittleren Teilchengröße von 0,1 bis 1000 nm und
wobei das Verfahren die folgenden Schritte umfasst:
a) Bereitstellen einer organischen Phase umfassend ein ethylenisch ungesättigtes Monomer, die organisch modifizierten magnetischen Nanopartikel, ein Co-Stabilisator, wobei der Co-Stabilisator eine Verbindung mit einem Molekulargewicht kleiner als 2.000 Da und einer Wasserlöslichkeit gemessen bei 25°C von kleiner als 1x10⁻³ Gew./Gew. % ist, eine hydrophobe Verbindung, wobei die hydrophobe Verbindung eine Verbindung mit einem Molekulargewicht höher als 2.000 Da und einer Wasserlöslichkeit gemessen bei 25°C von kleiner als 1x10⁻³ Gew./Gew. % ist, oder eine Kombination aus Co-Stabilisator und hydrophober Verbindung, und einer wässrigen Phase, die die photokatalytischen Nanopartikel umfasst,
b) Mischen der organischen Phase mit der wässrigen Phase aus Schritt (a), und Hinzufügen von Energie, die erzeugt wird durch eine mechanische Vorrichtung oder durch Methoden die auf dem chemischen Potential der Komponenten beruhen, zu der resultierenden Mischung, um eine Dispersion von Tröpfchen des Monomers und der magnetischen Nanopartikel zu produzieren, und
c) Zugeben eines Polymerisationsinitiators, ausgewählt aus thermischen Initiatoren, Redoxinitiatoren, Photoinitiatoren und Kombinationen davon und ausgewählt aus Öl- und wasserlöslichen Initiatoren,
wobei der Polymerisationsinitiator entweder zu der organischen Phase wie im vorhergehenden Schritt (a) definiert, zu der wässrigen Phase wie im vorhergehenden Schritt (a) definiert, oder zu der Dispersion von Tröpfchen des Monomers und der magnetischen Nanopartikel die aus Schritt (b) resultieren, hinzugefügt wird,
und Erhitzen zur Polymerisation des Monomers.

2. Das Verfahren nach Anspruch 1, wobei das ethylenisch ungesättigte Monomer ausgewählt ist aus der Gruppe bestehend aus Styrolen, (Meth)acrylaten, (Meth)acrylnitrile (Meth)acrylamide, ethylenisch ungesättigten Heterocyclen, Vinylester, Vinylhalogenide, Allylalkohole, Allylpolyether und Alkenen.

3. Das Verfahren nach einem der Ansprüche 1 bis 2, bei dem die magnetischen Nanopartikel Nanopartikel sind, die aus Metall- oder Halbmetalloxiden, Metall- oder Halbmetallhydroxide, Metall- oder Halbmetalloxyhydroxide oder Kombinationen davon gebildet sind.

4. Das Verfahren nach Anspruch 3, wobei die magnetischen Nanopartikel Nanopartikel aus Fe₃O₄, Fe₂O₃, BaO(Fe₂O₃)₆, SrO(Fe₂O₃)₆, AINiCo, FeO(OH), Fe(OH)₃ oder Kombinationen davon sind.

5. Das Verfahren nach einem der Ansprüche 1 bis 4, bei dem die photokatalytischen Nanopartikel Nanopartikel sind, die aus Metall- oder Halbmetalloxiden, Metall- oder Halbmetallhydroxide, Metall- oder Halbmetalloxyhydroxide oder Kombinationen davon gebildet sind.

6. Das Verfahren nach Anspruch 5, wobei die photokatalytischen Nanopartikel Nanopartikel, sind die aus TiO₂, ZnO, Al₂O₃, CeO₂, Fe₂O₃, Fe₃O₄, Al(OH)₃, Al(O)OH oder Kombinationen davon gebildet sind.

7. Das Verfahren nach einem der Ansprüche 1 bis 6, bei dem die photokatalytischen Nanopartikel mit einem Modifikator organisch modifiziert sind, ausgewählt aus Fettsäuren, Silanen, Essigsäure, Polyvinylaminen, Sulfonsäurederivaten, Polyvinyl Alkoholen, Polyestern, Polyethern, Polyphosphaten, Polyurethanen, Alkylammoniumsalzen, Polymeren und Copolymeren mit sauren Gruppen, insbesondere Carboxylgruppen, optional modifizierten Acrylat-Blockcopolymeren, optional modifizierten Polyurethanen, Polymeren und Copolymeren mit Fettsäure-Radikalen, optional modifizierten Polyestern, wie z.B. säurefunktionalisierten Polyestern, Polyphosphaten, optional modifizierte Polyethern, und Mischungen davon.

8. Das Verfahren nach einem der Ansprüche 1 bis 7, bei dem die photokatalytischen Nanopartikel dotiert sind.

9. Das Verfahren nach einem der Ansprüche 1 bis 8, bei dem der Co-Stabilisator der organischen Phase von Schritt (a) ein Co-Stabilisator ist, der sich kovalent an die Polymere bindet, und ausgewählt ist aus Benzoylperoxid, Laurylperoxid, Alkylmercaptan mit n>10, Lauryl(meth)acrylat, Stearyl(meth)acrylat, Octadecyl(meth)acrylat und Dodecyl(meth)acrylat.

10. Eine Dispersion, umfassend Verbundteilchen, erhältlich durch das Verfahren nach einem der Ansprüche 1 bis 9, wobei die Verbundteilchen umfassen
- einen Kern, der ein Polymermaterial und darin eingebettete organisch modifizierte magnetische Nanopartikel umfasst, wobei die magnetischen Nanopartikel eine durchschnittliche Partikelgröße von 0,1 bis 1000 nm haben und organisch modifiziert sind mit einem organischen Modifikator ausgewählt aus der Gruppe bestehend aus Fettsäuren, Silanen, Essigsäuren, Polyvinylaminen, Sulfonsäurederivaten, Polyvinyl Alkoholen, Polyestern, Polyethern, Polyphosphaten, Polyurethanen, Alkylammoniumsalzen, Polymeren und Copolymeren mit sauren Gruppen, insbesondere Carboxylgruppen, optional modifizierten Acrylat-Blockcopolymeren, optional modifizierten Polyurethanen, Polymeren und Copolymeren mit Fettsäure-Radikalen, optional modifizierten Polyestern, wie z.B. säurefunktionalisierten Polyestern, Polyphosphaten, optional modifizierte Polyethern und Mischungen davon, und
- eine Beschichtung um den Kern herum, die photokatalytische Nanopartikel umfasst, mit einer durchschnittlichen Partikelgröße von 0,1 bis 1000 nm.

11. Verbundteilchen umfassend:
- einen Kern, der eine Polymermaterial-Matrix und organisch modifizierte magnetische Nanopartikel umfasst, die in der Matrix eingebettet sind, wobei die magnetische Nanopartikel eine durchschnittliche Partikelgröße von 0,1 bis 1000 nm haben und organisch modifiziert sind mit einem organischen Modifikator ausgewählt aus der Gruppe bestehend aus Fettsäuren, Silanen, Essigsäuren, Polyvinylaminen, Sulfonsäurederivaten, Polyvinylalkoholen, Polyestern, Polyethern, Polyphosphaten, Polyurethanen, Alkylammoniumsalze, Polymeren und Copolymeren mit sauren Gruppen, insbesondere Carboxylgruppen, optional modifizierten Acrylat-Blockcopolymeren, optional modifizierten Polyurethanen, Polymeren und Copolymeren mit Fettsäure-Radikalen, optional modifizierten Polyestern, wie z.B. säurefunktionalisierten Polyestern, Polyphosphaten, optional modifizierten Polyethern und Mischungen davon, und
- eine Beschichtung um den Kern herum, die photokatalytische Nanopartikel umfasst, mit einer durchschnittlichen Partikelgröße von 0,1 bis 1000 nm.

12. Die Verwendung von Verbundteilchen nach Anspruch 11 zum Abbauen organischer Schadstoffe bei der Wasseraufbereitung, Luftreinigung, oder als antibakterielle Beschichtung.

13. Ein Verfahren zum Abbau organischer Schadstoffe, die in einem wässrigen Medium vorhanden sind, wobei das Verfahren die folgenden Schritte umfasst:
- Hinzufügen der in Anspruch 11 definierten Verbundteilchen in das wässrige Medium;
- Bestrahlen des aus dem vorhergehenden Schritt resultierenden Mediums mit einer Lichtstrahlung sodass die organischen Schadstoffe abgebaut werden; und
- Magnetisches Trennen der Verbundteilchen von dem wässrigen Medium.

## Revendications

1. Un procédé de production d'une dispersion comprenant des particules composites, les particules composites comprenant
- un noyau comprenant une matrice en matériau polymère et des nanoparticules magnétiques modifiées organiquement incorporées dans ladite matrice, les nanoparticules magnétiques ayant une taille moyenne de particules allant de 0,1 à 1000 nm et étant organiquement modifiés avec un modificateur organique choisi dans le groupe constitué par les acides gras, les silanes, l'acide acétique, les polyvinylamines, les dérivés d'acide sulfonique, les alcools polyvinyliques, les polyesters, les polyéthers, les polyphosphates, les polyuréthanes, les sels d'alkylammonium, les polymères et les copolymères ayant des groupes acides, en particulier des groupes carboxyliques, les copolymères séquencés acrylate facultativement modifiés, les polyuréthanes facultativement modifiés, les polymères et copolymères ayant des radicaux acides gras, les polyesters facultativement modifiés, tels que les polyesters à fonctionnalité acide, les polyphosphates, les polyéthers facultativement modifiés et des mélanges de ceux-ci, et
- un revêtement comprenant des nanoparticules photocatalytiques autour du cœur ayant une taille moyenne de particules allant de 0,1 à 1000 nm, et
le procédé comprenant les étapes suivantes :
a) le fait de prévoir une phase organique comprenant un monomère éthyléniquement insaturé, les nanoparticules magnétiques modifiées organiquement, un co-stabilisant, le co-stabilisant étant un composé ayant un poids moléculaire inférieur à 2000 Da et une solubilité dans l'eau mesurée à 25°C inférieure à 1x10⁻³% en pourcentage en poids, un hydrophobe, l'hydrophobe étant un composé ayant un poids moléculaire supérieur à 2000 Da et une solubilité dans l'eau mesurée à 25°C inférieure à 1x10⁻³% en pourcentage en poids, ou une combinaison de co-stabilisant / hydrophobe, et une phase aqueuse comprenant les nanoparticules photocatalytiques,
b) le fait de mélanger la phase organique avec la phase aqueuse de l'étape (a) et de fournir, au mélange en résultant, de l'énergie par des dispositifs mécaniques ou par des procédés basés sur le potentiel chimique des composants afin de produire une dispersion de gouttelettes du monomère et des nanoparticules magnétiques, et
c) le fait d'ajouter un initiateur de polymérisation choisi parmi les initiateurs thermiques, les initiateurs redox, les photo-initiateurs et les combinaisons de ceux-ci et choisis parmi les initiateurs hydrosolubles ou solubles dans l'huile, l'initiateur de polymérisation étant ajouté soit à la phase organique telle que définie à l'étape précédente (a), soit à la phase aqueuse telle que définie à l'étape précédente (a), soit à la dispersion de gouttelettes du monomère et des nanoparticules magnétiques résultant de l'étape (b), et le fait de chauffer pour polymériser le monomère.

2. Le procédé selon la revendication 1, dans lequel le monomère à insaturation éthylénique est choisi dans le groupe constitué par les styrènes, les (méth)acrylates, les (méth)acrylonitriles, les (méth)acrylamides, les hétérocycles à insaturation éthylénique, les esters vinyliques, les halogénures vinyliques, les alcools allyliques, polyéthers et alcènes allyliques.

3. Le procédé selon l'une quelconque des revendications 1 à 2, dans lequel les nanoparticules magnétiques sont des nanoparticules formées d'oxydes métalliques ou semi-métalliques, d'hydroxydes métalliques ou semi-métalliques, d'oxyhydroxydes métalliques ou semi-métalliques, ou les combinaisons de ceux-ci.

4. Le procédé selon la revendication 3, dans lequel les nanoparticules magnétiques sont des nanoparticules de Fe₃O₄, Fe₂O₃, BaO(Fe₂O₃)₆, SrO(Fe₂O₃)₆, AINiCo, FeO(OH), Fe(OH)₃, ou les combinaisons de ceux-ci.

5. Le procédé selon l'une quelconque des revendications 1 à 4, dans lequel les nanoparticules photocatalytiques sont des nanoparticules formées d'oxydes métalliques ou semi-métalliques, d'hydroxydes métalliques ou semi-métalliques, d'oxyhydroxydes métalliques ou semi-métalliques, ou les combinaisons de ceux-ci.

6. Le procédé selon la revendication 5, dans lequel les nanoparticules photocatalytiques sont des nanoparticules formées de TiO₂, ZnO, Al₂O₃, CeO₂, Fe₂O₃, Fe₃O₄, Al(OH)₃,AI(O)OH ou les combinaisons de ceux-ci.

7. Le procédé selon l'une quelconque des revendications 1 à 6 dans lequel les nanoparticules photocatalytiques sont modifiées organiquement avec un modificateur choisi parmi les acides gras, les silanes, l'acide acétique, les polyvinylamines, les dérivés d'acide sulfonique, les alcools polyvinyliques, les polyesters, les polyéthers, les polyphosphates, les polyuréthannes, les sels d'alkylammonium, les polymères et copolymères à groupes acides, notamment des groupes carboxyliques, les copolymères séquencés acrylate facultativement modifiés, les polyuréthannes facultativement modifiés, les polymères et copolymères à radicaux acides gras, les polyesters facultativement modifiés, tels que les polyesters à fonctionnalité acide, les polyphosphates, les polyéthers facultativement modifiés et les mélanges de ceux-ci.

8. Le procédé selon l'une quelconque des revendications 1 à 7 dans lequel les nanoparticules photocatalytiques sont dopées.

9. Le procédé selon l'une quelconque des revendications 1 à 8, dans lequel le co-stabilisant de la phase organique de l'étape (a) est un co-stabilisant qui se fixe de manière covalente au polymère et il est choisi parmi le peroxyde de benzoyle, le peroxyde de lauryle, les alkyl mercaptans ayant n>10, le (méth)acrylate de lauryle, le (méth)acrylate de stéaryle, le (méth)acrylate d'octadécyle et le (méth)acrylate de dodécyle.

10. Une dispersion comprenant des particules composites aptes à être obtenues par le procédé selon l'une quelconque des revendications 1 à 9, les particules composites comprenant
- un noyau comprenant un matériau polymère et des nanoparticules magnétiques modifiées organiquement incorporées dans celui-ci, les nanoparticules magnétiques ayant une taille moyenne de particules allant de 0,1 à 1000 nm et étant organiquement modifiées avec un modificateur organique choisi dans le groupe comprenant les acides gras, les silanes, l'acide acétique, les polyvinylamines, les dérivés de l'acide sulfonique, les alcools polyvinyliques, les polyesters, les polyéthers, les polyphosphates, les polyuréthanes, les sels d'alkylammonium, les polymères et copolymères ayant des groupes acides, en particulier des groupes carboxyliques, les copolymères séquencés acrylate facultativement modifiés, les polyuréthanes facultativement modifiés, les polymères et copolymères ayant des radicaux acides gras, les polyesters facultativement modifiés, tels que les polyesters à fonctionnalité acide, les polyphosphates, les polyéthers facultativement modifiés et les mélanges de ceux-ci, et
- un revêtement comprenant des nanoparticules photocatalytiques autour du noyau ayant une taille moyenne de particules allant de 0,1 à 1000 nm.

11. Particules composites comprenant :
- un noyau comprenant une matrice de matériau polymère et des nanoparticules magnétiques modifiées organiquement incorporées dans ladite matrice, les nanoparticules magnétiques ayant une taille moyenne de particules allant de 0,1 à 1000 nm et étant organiquement modifiées avec un modificateur organique choisi dans le groupe constitué des acides gras, des silanes, de l'acide acétique, des polyvinylamines, des dérivés d'acide sulfonique, des alcools polyvinyliques, des polyesters, des polyéthers, des polyphosphates, des polyuréthanes, des sels d'alkylammonium, des polymères et copolymères ayant des groupes acides, en particulier des groupes carboxyliques, des copolymères séquencés acrylate facultativement modifiés, des polyuréthanes facultativement modifiés, des polymères et des copolymères ayant des radicaux acides gras, les polyesters facultativement modifiés, tels que les polyesters à fonctionnalité acide, les polyphosphates, les polyéthers facultativement modifiés et les mélanges de ceux-ci, et
- un revêtement comprenant des nanoparticules photocatalytiques autour du cœur ayant une taille moyenne de particules allant de 0,1 à 1000 nm.

12. Utilisation des particules composites telles que définies dans la revendication 11 pour dégrader des polluants organiques dans le traitement de l'eau, la décontamination de l'air ou comme revêtement antibactérien.

13. Un procédé de dégradation de polluants organiques présents dans un milieu aqueux, ledit procédé comprenant les étapes suivantes :
- ajouter les particules composites telles que définies à la revendication 11 au milieu aqueux ;
- exposer le milieu résultant de l'étape précédente à un rayonnement lumineux de sorte que les polluants organiques soient dégradés ; et
- séparer magnétiquement les particules composites du milieu aqueux.
